# EUROPÄISCHE PATENTSCHRIFT

(11) **EP 3 624 582 B1**
(45) Veröffentlichungstag und Bekanntmachung des Hinweises auf die Patenterteilung: **14.10.2020**
(21) Anmeldenummer: 19709476.6
(22) Anmeldetag: 06.03.2019
(51) Int. Cl.: A01K 1/00, F24F 13/14, F24F 5/00, F24F 7/00

(54) **KLAPPENSYSTEM FÜR EIN GEBÄUDE**
FLAP SYSTEM FOR A BUILDING
SYSTÈME DE VOLETS POUR UN BÂTIMENT

(30) Priorität: 09.03.2018 EP 18160971
(43) Veröffentlichungstag der Anmeldung: 25.03.2020
(73) Patentinhaber: Fliegl Agro-Center GmbH, 84556 Kastl (DE)
(72) Erfinder: FLIEGL, Josef, Sen., 84556 Kastl (DE)
(74) Vertreter: Nußbaum, Christopher
(86) Internationale Anmeldenummer: PCT/EP2019/055595
(87) Internationale Veröffentlichungsnummer: WO 2019/170764

(56) Entgegenhaltungen:
- WO-A1-2008/093612
- WO-A1-2013/113987
- FR-A3- 2 850 701
- US-A- 3 741 102
- US-A- 5 441 451

## Beschreibung

Die vorliegende Erfindung betrifft ein Klappensystem für ein Gebäude, welches insbesondere als Belüftungseinrichtung, Sonnenschutz, Isolationsschutz, Sichtschutz und/oder Witterungsschutz ausgelegt ist.

Bei Ställen zur Viehhaltung ist es oftmals wünschenswert, wenn diese durch geeignete Mechanismen belüftet werden können. Je nach Witterungsverhältnissen kann es dabei erforderlich sein, dass manchmal eine möglichst gute Belüftung im Vordergrund steht und manchmal eher ein Witterungsschutz für die Tiere im Vordergrund steht. So kann es beispielsweise sein, dass in Sommermonaten mit hohen Temperaturen ein Stall besonders gut belüftet bzw. durchlüftet werden können sollte, sodass darin gehaltenes Vieh genügend frische Luft erhält und es im Stall nicht zu heiß wird. In kalten Wintermonaten hingegen ist es üblicherweise wünschenswert, einen guten Kompromiss zwischen einem Witterungsschutz und einer ausreichenden Belüftung sicherzustellen. Auch bei anderen Gebäuden, wie beispielsweise in Flughafengebäuden, Bürokomplexen und dergleichen, können derartige Belüftungsfunktionen und Witterungsschutzfunktionen sinnvoll und wünschenswert sein. Oftmals ist es zudem auch wünschenswert, einen geeigneten Sonnenschutz zu ermöglichen, sodass im Gebäude befindliche Personen beispielsweise nicht übermäßig geblendet werden.

Die US 3 741 102 A zeigt ein Klappensystem für ein Gebäude, umfassend eine verschwenkbare Klappe sowie eine Vorrichtung zum Verschwenken der Klappe. Ähnliche Klappensysteme zeigen zudem noch die WO 2008/093612 A1, die WO 2013/113987 A1, die US 5 441 451 A sowie die FR 2 850 701 A3.

Insbesondere wenn betreffende Gebäude sich über eine große Länge erstrecken und über die gesamte Länge eine Belüftungsfunktion, eine Sonnenschutzfunktion, ein Sichtschutz und/oder ein Witterungsschutz realisiert werden soll, kann dies sich als relativ schwierig erweisen.

Es ist daher die Aufgabe der vorliegenden Erfindung, eine Lösung bereitzustellen, mittels welcher auf besonders einfache und dennoch zuverlässige Weise eine Belüftungsmöglichkeit, eine Sonnenschutzmöglichkeit, eine Sichtschutzmöglichkeit und/oder Witterungsschutzmöglichkeit für ein Gebäude bereitgestellt wird.

Diese Aufgabe wird durch ein Klappensystem für ein Gebäude mit den Merkmalen des Patentanspruchs 1 gelöst. Weitere mögliche Ausgestaltungen der Erfindung sind in den abhängigen Ansprüchen angegeben.

Das erfindungsgemäße Klappensystem für ein Gebäude, welches insbesondere als Belüftungseinrichtung, Sonnenschutz, Sichtschutz und/oder Witterungsschutz ausgelegt ist, umfasst einen Trägerarm, mittels welchem eine Trägerachse translatorisch unbeweglich und um ihre Längsachse verdrehbar gelagert ist. Des Weiteren umfasst das Klappensystem eine verdrehfest mit der Trägerachse verbundene und dadurch verschwenkbare Klappe, wobei die Trägerachse zwischen einem oberen Ende und einem unteren Ende der Klappe angeordnet ist. Die Klappe ist mit einer als Übersetzung dienenden Rahmenstruktur verbunden. Zudem umfasst das Klappensystem eine translatorisch in Hochrichtung des Klappensystems bewegbar gelagerte Mitnehmereinheit, welche unter Vermittlung eines Ausgleichselements gelenkig mit der Rahmenstruktur verbunden ist, sodass eine translatorische Bewegung der Mitnehmereinheit ein Verschwenken der Klappe bewirkt. Des Weiteren umfasst das Klappensystem eine Antriebseinrichtung zum Bewegen der Mitnehmereinheit.

Die zumindest eine verschwenkbare Klappe kann beispielsweise aus Plexiglas oder auch Glas hergestellt sein. Bei der Klappe kann es sich um getöntes oder auch um undurchsichtiges Material handeln. Die Klappe dient zur Belüftung, als Sonnenschutz, als Sichtschutz und/oder Witterungsschutz für das betreffende Gebäude, an welchem das Klappensystem angeordnet ist. Die Klappe kann insbesondere auch als Wärmeisolation, somit als Isolationsschutz, dienen, also insbesondere wärmedämmend sein. Dies kann z.B. durch eine entsprechend geeignete Isolationsschicht in der Klappe realisiert sein. Die Klappe kann zwischen einer geöffneten Stellung und einer verschlossenen Stellung verschwenkt werden, dadurch dass die Klappe verdrehfest mit der besagten Trägerachse verbunden ist. Dadurch, dass die Trägerachse zwischen dem oberen Ende und dem unteren Ende der Klappe angeordnet ist, ergeben sich besonders günstige Drehmomentverhältnisse.

Zusätzlich zu diesen günstigen Drehmomentverhältnissen trägt die als Übersetzung dienende Rahmenstruktur bei, die mit der Klappe verbunden ist. Die Mitnehmereinheit ist dabei translatorisch in Hochrichtung des Klappensystems verschiebbar gelagert. Mittels einer Antriebseinrichtung, welche beispielsweise einen Elektromotor umfassen kann, kann die Mitnehmereinheit auf und ab bewegt werden. Diese translatorische Bewegung der Mitnehmereinheit wird unter Vermittlung des Ausgleichselements auf die Rahmenstruktur übertragen. Über diese Rahmenstruktur wird eine Art Hebelwirkung erzielt, wobei ein Angriffspunkt, an welchem das Ausgleichselement mit der Rahmenstruktur verbunden ist, einen gewissen Abstand zur Trägerachse, genauer zur Längsachse der Trägerachse, aufweist. Dieser Abstand definiert einen Hebelarm und somit das Übersetzungsverhältnis, welches durch die Rahmenstruktur bei der Kraftübertragung von der Mitnehmereinheit auf die Trägerachse realisiert wird.

Ein relativ geringer translatorischer Kraftbeitrag durch die Mitnehmereinheit reicht daher aus, um unter Vermittlung der Rahmenstruktur die Trägerachse in Rotation zu versetzen, um dadurch die Klappe zu verschwenken. Selbst bei einer sehr weit ausgedehnten Klappe bzw. einer sehr großen und schweren Klappe sind somit relativ geringe Antriebskräfte bzw. Antriebsmomente erforderlich, um die Klappe zu verschwenken. Dies wird im Wesentlichen dadurch erreicht, dass die Rahmenstruktur als Übersetzung vorhanden ist. Dadurch, dass die Trägerachse nicht am oberen Ende oder am unteren Ende der Klappe, sondern irgendwo dazwischen angeordnet ist, ist die Klappe nicht sonderlich anfällig für insbesondere durch Wind bedingte Verdrehungen bzw. Verschwenkungen um die Längsachse der Trägerachse. Drückt beispielsweise von derselben Seite im Bereich des oberen Endes und des unteren Endes der Klappe Wind auf die Klappe, so wird eine Drehbewegung der Trägerachse und somit der Klappe quasi selbstgehemmt, was dadurch begründet ist, dass eben die Trägerachse zwischen dem oberen Ende und dem unteren Ende der Klappe angeordnet ist. Auch bei hohen Windgeschwindigkeiten bzw. stürmischen Wetterbedingungen ist das Klappensystem aufgrund des beschriebenen Aufbaus besonders stabil, sodass selbst bei großen an der Klappe angreifenden Windkräften diese nicht in unerwünschter Weise aufgeschwenkt oder zugeschwenkt werden kann.

Eine mögliche Ausführungsform der Erfindung sieht vor, dass die Trägerachse in einer oberen Hälfte der Klappe angeordnet ist. Beispielsweise ist es möglich, dass oberhalb von der Trägerachse sich ein Drittel der Klappe und unterhalb von der Trägerachse sich die weiteren zwei Drittel der Klappe erstrecken. Dadurch ergibt sich eine besonders günstige Anordnung der Trägerachse im Hinblick auf ihren Bauraumbedarf, damit diese verschwenkt werden kann, und im Hinblick darauf, dass die Klappe möglichst wenig windempfindlich sein soll.

Eine weitere mögliche Ausführungsform der Erfindung sieht vor, dass die Antriebseinrichtung wenigstens eine Antriebswelle mit einem Zahnrad aufweist, welches in eine Zahnstange der Mitnehmereinheit eingreift. Eine Drehbewegung der Antriebswelle wird also in eine Drehbewegung des Zahnrads umgesetzt, in Folge dessen die Zahnstange und somit die Mitnehmereinheit translatorisch in Hochrichtung des Klappensystems bewegt wird. Diese translatorische Bewegung der Mitnehmereinheit wird wiederum - wie vorstehend bereits beschrieben - unter Vermittlung der Rahmenstruktur in eine Drehbewegung bzw. Verschwenkbewegung der Trägerachse bzw. der Klappe umgesetzt. Die Antriebswelle ist dabei translatorisch unbeweglich gelagert. Der Vorteil dieser möglichen Ausführungsform der Erfindung liegt unter anderem darin, dass solange die Antriebswelle sich nicht dreht, die Mitnehmereinheit sich überhaupt nicht translatorisch in Hochrichtung bewegen kann, in Folge dessen die Klappe auch nicht verschwenkt werden kann. Die Antriebswelle kann beispielsweise mit einem Elektromotor oder einem anderen Antrieb verbunden sein, welcher die Antriebswelle in Drehung versetzen kann, um dadurch das Zahnrad und die Mitnehmereinheit anzutreiben, wenn die Klappe aufgeschwenkt oder zugeschwenkt werden soll. Je nachdem, wie einfach oder schwer der Motor ohne Bestromung in Drehung versetzt werden kann, bewirkt der Motor eine Hemmung der Bewegung der Klappe. Der Motor trägt also unter Vermittlung der Antriebswelle und der Mitnehmereinheit aufgrund des formschlüssigen Eingriffs des Zahnrads in die Zahnstange der Mitnehmereinheit dazu bei, dass die Klappe besonders windstabil ist, sich also nicht ohne Weiteres öffnen oder schließen kann.

Gemäß einer weiteren möglichen Ausführungsform der Erfindung ist es vorgesehen, dass die Antriebswelle und die Trägerachse parallel zueinander ausgerichtet sind. Die Antriebswelle und die Trägerachse verlaufen beispielsweise in Längsrichtung des Klappensystems. Durch die parallele Ausrichtung der Antriebswelle und der Trägerachse kann eine relativ bauraumsparende Konstruktion ermöglicht werden.

Eine weitere mögliche Ausführungsform der Erfindung sieht vor, dass die als Übersetzung dienende Rahmenstruktur zwei Streben aufweist, die gemeinsam mit einem Halter, unter dessen Vermittlung die Klappe verdrehfest mit der Trägerachse verbunden ist, ein Dreieck bilden. Der Halter kann beispielsweise innenseitig an der Klappe angeordnet sein. Am Halter kann beispielsweise eine Schelle oder dergleichen angeschweißt sein, welche die Trägerachse umgreift und dadurch den Halter und somit auch die Klappe verdrehfest mit der Trägerachse verbindet. Durch die dreieckige Konstruktion, gebildet aus den beiden Streben der Rahmenstruktur und dem Halter ergibt sich einerseits eine besonders stabile Konstruktion und andererseits auch eine relativ kompakte Konstruktion, wobei zudem genug Platz für die Trägerachse und für die Antriebswelle geschaffen wird. Die Streben der Rahmenstruktur können beispielsweise aus Blechen bestehen, genauso der Halter. Der Halter kann beispielsweise mittels Schrauben oder anderer Verbindungsmittel flächig an der Rückseite bzw. Innenseite der Klappe befestigt sein.

Eine weitere mögliche Ausführungsform der Erfindung sieht vor, dass die Streben an einer Ecke des Dreiecks miteinander verbunden sind, an welcher die Ausgleichseinheit gelenkig befestigt ist. Die Ausgleichseinheit greift also mit anderen Worten an einer Ecke des Dreiecks an, welches aus den beiden Streben der Rahmenstruktur und dem Halter gebildet wird, wobei dieser Angriffspunkt genau dort ist, wo die beiden Streben aneinander befestigt sind. Die beiden Streben der Rahmenstruktur und der Halter können beispielweise ein rechtwinkliges Dreieck bilden, wobei der Halter die Kathete, eine der Streben die Ankathete und die andere Strebe die Hypotenuse bildet. Andere Dreiecksformen sind natürlich ebenfalls möglich.

Gemäß einer weiteren möglichen Ausführungsform der Erfindung ist es vorgesehen, dass mehrere der Klappen in Längsrichtung des Klappensystems fluchtend in einer Reihe hintereinander angeordnet und mit der Trägerachse verbunden sind. Je Klappe dieser Reihe ist ein separater Trägerarm vorgesehen, mittels welchem die Trägerachse translatorisch unbeweglich und um ihre Längsachse verdrehbar gelagert ist. An jeder dieser Klappen der Reihe ist die als Übersetzung dienende Rahmenstruktur angebracht. Mit anderen Worten weist jede der Klappen dieser Reihe eine eigene Rahmenstruktur als Übersetzung auf. Je Klappe ist zudem eine der Mitnehmereinheiten und Ausgleichselemente vorgesehen, unter deren Vermittlung die Mitnehmereinheiten gelenkig mit der jeweiligen Rahmenstruktur verbunden sind, sodass eine translatorische Bewegung der Mitnehmereinheiten ein Verschwenken der Klappen bewirkt. Es kann vorgesehen sein, dass für die gesamte Reihe der hintereinander angeordneten Klappen nur ein einziger Motor vorgesehen ist, somit auch beispielsweise nur eine einzige Antriebswelle mit einem daran angeordneten Zahnrad als Teil der besagten Antriebseinrichtung vorgesehen ist. Sind die Klappen z.B. jeweils mehrere Meter lang, wobei mehrere dieser Klappen in besagter Reihe hintereinander angeordnet sind, ist es aufgrund der jeweiligen als Übersetzung dienenden Rahmenstrukturen und des Zusammenspiels zwischen diesen Rahmenstrukturen und der Mitnehmereinheiten möglich, die Klappen trotz ihrer enormen Längsausdehnung zumindest im Wesentlichen synchron aufzuschwenken und zuzuschwenken. Denn ein Verschwenken der in Reihe hintereinander angeordneten Klappen wird nicht durch ein direktes Aufbringen eines Drehmoments auf die Trägerachse realisiert. Stattdessen wird die jeweilige translatorische Bewegung der je Klappe der Reihe vorgesehenen Mitnehmereinheiten in eine jeweilige Verdrehbewegung der Rahmenstrukturen je Klappe umgesetzt, welches dann erst dazu führt, dass die Klappen verschwenkt werden. Die Rahmenstruktur greift dabei ihrerseits nicht direkt an der Trägerachse an. Stattdessen greift die Rahmenstruktur direkt oder indirekt an der Klappe an. Dadurch ist es selbst bei einer großen Längsausdehnung der in Reihe hintereinander angeordneten Klappen mit einer geringen Antriebsleistung bzw. Antriebskraft und ohne das Erfordernis einer besonders großen Torsionssteifigkeit der Trägerachse möglich, die gesamte Reihe der in Längsrichtung des Klappensystems fluchtend angeordneten Klappen quasi synchron aufzuschwenken und zuzuschwenken. Denn es tritt aufgrund der beschriebenen Konstruktion keine auch kaum eine Torsion an der Trägerachse auf. Denn die einzelnen Klappen drehen die Trägerachse mit und nicht umgekehrt. Mit anderen Worten treiben die Klappen die Trägerachse an und nicht die Trägerachse die Klappen. Dadurch ergibt sich eine besonders stabile und einfache Konstruktion für die in Reihe hintereinander angeordneten Klappen.

Eine weitere mögliche Ausführungsform der Erfindung sieht vor, dass die Klappen im Bereich ihrer äußeren Längsenden längsverschieblich zur Trägerachse und in einem mittleren Bereich unverschieblich zur Trägerachse gelagert sind. Durch die längsverschiebliche Lagerung der Klappen im Bereich ihrer äußeren Längsenden können diese sich in diesen Bereichen relativ zur Trägerachse bewegen bzw. ausdehnen. Unterschiedliche Wärmeausdehnungskoeffizienten bezüglich der Trägerachse und der Klappen können dadurch problemlos ausgeglichen werden. Durch die unverschiebliche Lagerung der Klappen in ihren mittleren Bereich zur Trägerachse wird sichergestellt, dass die Klappen verdrehfest und insgesamt zuverlässig an der Trägerachse fixiert bleiben. Durch die längsverschiebliche Lagerung in den äußeren Bereichen der Klappen, also im Bereich ihrer äußeren Längsenden, kann das Auftreten von mechanischer Spannung, welche sich aufgrund unterschiedlicher Wärmeausdehnungskoeffizienten ansonsten ergeben könnte, auf ein Minimum reduziert werden.

Gemäß einer weiteren möglichen Ausführungsform der Erfindung ist es vorgesehen, dass mehrere Klappen in Hochrichtung des Klappensystems in einer Spalte übereinander angeordnet sind. Je Klappe ist eine separate Trägerachse vorgesehen, welche mittels eines jeweils separaten Trägerarms translatorisch unbeweglich um ihre jeweilige Längsachse verdrehbar gelagert ist. An jeder dieser Klappen ist die als Übersetzung dienende Rahmenstruktur angebracht. Mit anderen Worten weist also jede dieser Klappen eine eigene Rahmenstruktur auf, die als Übersetzung dient. Für jede dieser Klappen ist zudem jeweils eines der Ausgleichselemente vorgesehen, unter deren Vermittlung die Mitnehmereinheit gelenkig mit der jeweiligen Rahmenstruktur verbunden ist, sodass eine translatorische Bewegung der Mitnehmereinheit ein Verschwenken der Klappen bewirkt. Für die gesamte Spalte der übereinander angeordneten Klappen kann es vorgesehen sein, dass nur eine einzige Mitnehmereinheit vorhanden ist. Eine translatorische Bewegung der Mitnehmereinheit bewirkt also ein gleichzeitiges Aufschwenken bzw. Zuschwenken der übereinander angeordneten Klappen. Es ist beispielsweise aber auch möglich, dass zwei der Mitnehmereinheiten für die übereinander angeordneten Klappen vorgesehen sind. So könnte beispielsweise die oberste Klappe separat verschwenkbar ausgebildet sein, für diese dann eine der beiden Mitnehmereinheiten vorgesehen ist. Die andere der beiden Mitnehmereinheiten dient dazu, die restlichen übereinander angeordneten Klappen synchron aufzuschwenken und zuzuschwenken. Wird das Klappensystem beispielsweise bei einem Viehstall verwendet, so bringt diese Vorgehensweise gewisse Vorteile mit sich. Insbesondere im Winter bei sehr niedrigen Temperaturen kann es von Vorteil sein, wenn beispielsweise nur die oberste der Klappen separat geöffnet und geschlossen werden kann. Die anderen unteren Klappen bieten einen guten Witterungsschutz für das im Stall befindliche Vieh, wobei die oberste Klappe noch dafür sorgen kann, dass genügend Frischluftzufuhr vorhanden ist.

Eine weitere mögliche Ausführungsform der Erfindung sieht vor, dass die oberen Enden und die unteren Enden der Klappen eine in Tiefenrichtung der Klappen erhabene Form aufweisen, welche in der geschlossenen Stellung der Klappen formschlüssig ineinandergreifen. Beispielsweise können die oberen Enden und die unteren Enden der Klappen im Querschnitt bzw. von der Seite betrachtet eine Trapezform aufweisen. Diese Trapeze greifen dann bei geschlossenen Klappen ineinander. Dadurch wird eine gute Abdichtungsfunktion gegenüber Wind erzielt. Zudem dienen diese erhabenen Formen zur Versteifung der Klappen. Die Trapezform oder auch anderweitige Formen können sich über die gesamte Länge der Klappen erstrecken und dadurch noch zur zusätzlichen Versteifung der Klappen dienen. In Hochrichtung entlang des Klappensystems strömender Wind kann dadurch nur schlecht oder gar nicht unter die einzelnen in ihrer geschlossenen Stellung angeordneten Klappen gelangen und somit auch nicht ins Innere des Gebäudes gelangen, falls das Klappensystem z.B. als eine Art vorgehängte Fassade ausgebildet ist. Die einzelnen übereinander angeordneten Klappen sind also in ihrer geschlossenen Stellung quasi miteinander bzw. untereinander verschachtelt angeordnet, da die jeweils benachbarten oberen und unteren Enden in der geschlossenen Stellung der Klappen formschlüssig ineinandergreifen. Zudem können sich dadurch die in der geschlossenen Stellung angeordneten Klappen besonders gut gegenseitig stabilisieren, sodass sie wenig anfällig für einen Windangriff sind, sich also auch bei starken Winden nicht selbstständig öffnen.

Weitere Vorteile, Merkmale und Einzelheiten der Erfindung ergeben sich aus der nachfolgenden Beschreibung eines möglichen Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht eines teilweise dargestellten Viehstalls, welcher mit einem Klappensystem versehen ist, das mehrere Klappen aufweist, die auf und zugeschwenkt werden können, um so eine Belüftung und auch einen Witterungsschutz bieten zu können;
- Fig. 2: eine Innenansicht des Viehstalls, wobei das Klappensystem mit den mehreren übereinander und in Längsrichtung hintereinander angeordneten Klappen zu erkennen ist;
- Fig. 3: eine weitere Innenansicht des Viehstalls;
- Fig. 4: eine perspektivische Detailansicht, in welcher zwei Motoren des Klappensystems zu erkennen sind;
- Fig. 5: eine weitere perspektivische Detailansicht des Klappensystems, wobei zwei dreieckige Rahmenstrukturen zu erkennen sind, die an zwei der Klappen angebracht sind;
- Fig. 6: eine Detailansicht von einer der Klappen, welche unter Vermittlung eines Halters verdrehfest mit einer Trägerachse verbunden ist;
- Fig. 7: eine perspektivische Detailansicht auf einen oberen Bereich des Klappensystems;
- Fig. 8: eine schematische Seitenansicht von einer der Klappen des Klappensystems, einmal im geschlossenen Zustand und einmal im geöffneten Zustand.

In den Figuren sind gleiche oder funktionsgleiche Elemente mit den gleichen Bezugszeichen versehen worden.

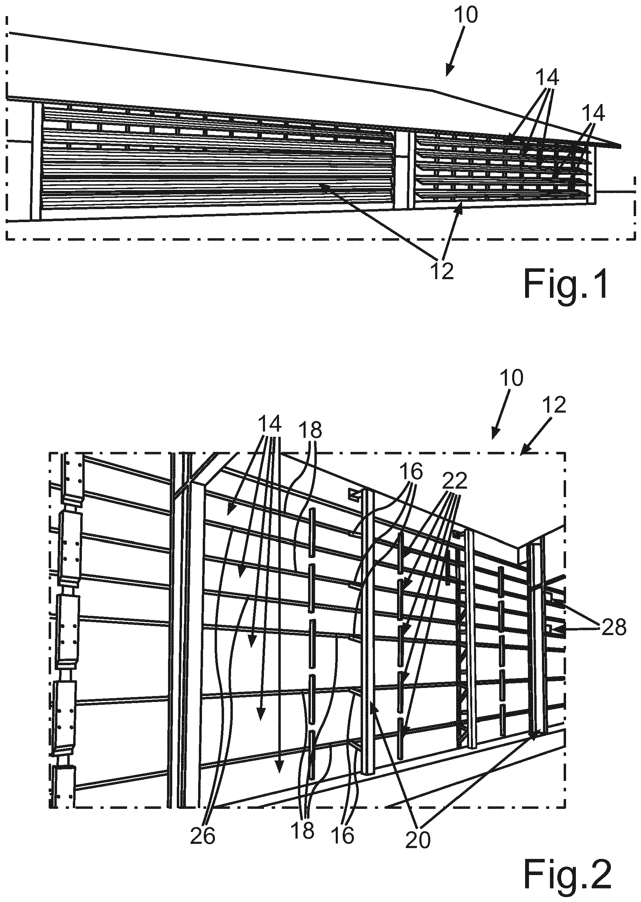

Ein Viehstall 10 ist in einer Perspektivansicht teilweise in Fig. 1 gezeigt. An einer nicht näher bezeichneten Längsseite des Viehstalls 10 ist ein Klappensystem 12 mit mehreren aufschwenkbaren und zuschwenkbaren Klappen 14 angeordnet. Die zwischen einer geschlossenen Stellung und einer geöffneten Stellung verschwenkbaren Klappen 14 dienen vor allem zur Belüftung des Viehstalls 10. Zudem dienen die Klappen 14 in ihrer geschlossenen Stellung vor allem auch als Witterungsschutz. Zudem können die Klappen 14, bei entsprechender Tönung, auch als Sonnenschutz oder auch als Sichtschutz dienen.

In Fig. 2 ist der Viehstall 10 von innen in einer Perspektivansicht teilweise dargestellt, wobei der Blick in dieser Perspektive von innen auf die geschlossenen Klappen 14 des Klappensystems 12 gerichtet wird. Das Klappensystem 12 umfasst mehrere Trägerarme 16, mittels welchen jeweilige Trägerachsen 18 translatorisch unbeweglich und um ihre Längsachse verdrehbar gelagert sind. Zum Klappensystem 12 gehören mehrere Pfosten 20, an denen die Trägerarme 16 angeordnet bzw. befestigt sind. Die Pfosten 20 sind mittels geeigneter nicht näher bezeichneter Befestigungsmittel von innen am Viehstall 10 befestigt.

Die jeweiligen Klappen 14, welche der Übersichtlichkeit halber nicht alle mit Bezugszeichen versehen worden sind, sind verdrehfest mit den jeweiligen Trägerachsen 18 verbunden und dadurch verschwenkbar gelagert. Wie zu erkennen, sind die Trägerachsen 18 zwischen einem jeweiligen oberen und unteren Ende der Klappen 14 angeordnet. Konkret sind die Trägerachsen 18 ungefähr so angeordnet, dass ein Drittel der jeweiligen Klappen 14 oberhalb von der Trägerachse 18 und zwei Drittel der Klappen 14 unterhalb von der jeweiligen Trägerachse 18 angeordnet ist.

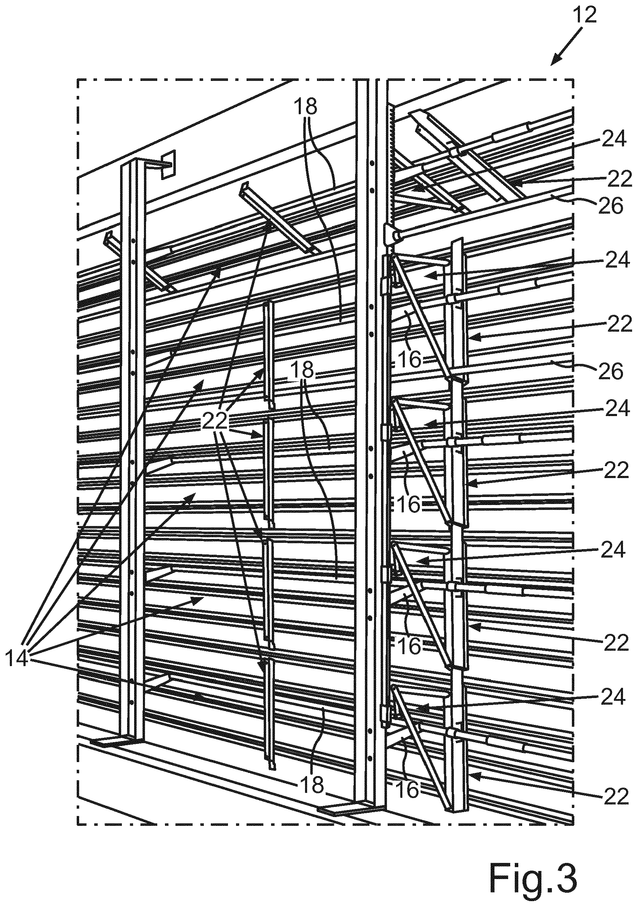

In Fig. 3 ist das Klappensystem 12 wiederum aus dem Inneren des Viehstalls 10 heraus gezeigt. Innenseitig an den Klappen 14 sind mehrere Halter 22 angebracht. Die Halter 22 erstrecken sich im Wesentlichen in Hochrichtung der Klappen 14 und sind beispielsweise mittels Schrauben innenseitig an den Klappen 14 befestigt. Die Halter 22 sind wiederum verdrehfest mit den jeweiligen Trägerachsen 18 verbunden. Somit sind die jeweiligen Klappen 14 also unter Vermittlung der an diesen innenseitig angebrachten Haltern 22 verdrehfest mit den Trägerachsen 18 verbunden. Da die Trägerachsen 18 wiederum mittels der hier nur teilweise bezeichneten Trägerarme 16 gehalten werden, sind die einzelnen Klappen 14 also jeweils verschwenkbar jedoch translatorisch unbeweglich befestigt bzw. gelagert. Die Trägerachsen 18 dienen also dazu, die Klappen 14 translatorisch in allen Raumrichtungen zu fixieren und eine Verdrehung der Klappen 14 zu ermöglichen. Mit anderen Worten dienen die Trägerachsen 18 also zur Lagerung der Klappen 14.

Einige der Halter 22 sind mit als Übersetzung dienenden Rahmenstrukturen 24 verbunden. Unter Vermittlung dieser Rahmenstrukturen 24, welche mit den betreffenden Haltern 22 verbunden sind, können die einzelnen Klappen 14 aufgeschwenkt und zugeschwenkt werden. Das Klappensystem 12 umfasst zudem noch zwei Antriebswellen 26, welche dazu dienen, die Klappen 14 aufzuschwenken und zuzuschwenken. Die genaue Kopplung zwischen den Klappen 14 und den Antriebswellen 26 wird nachfolgend noch näher erläutert.

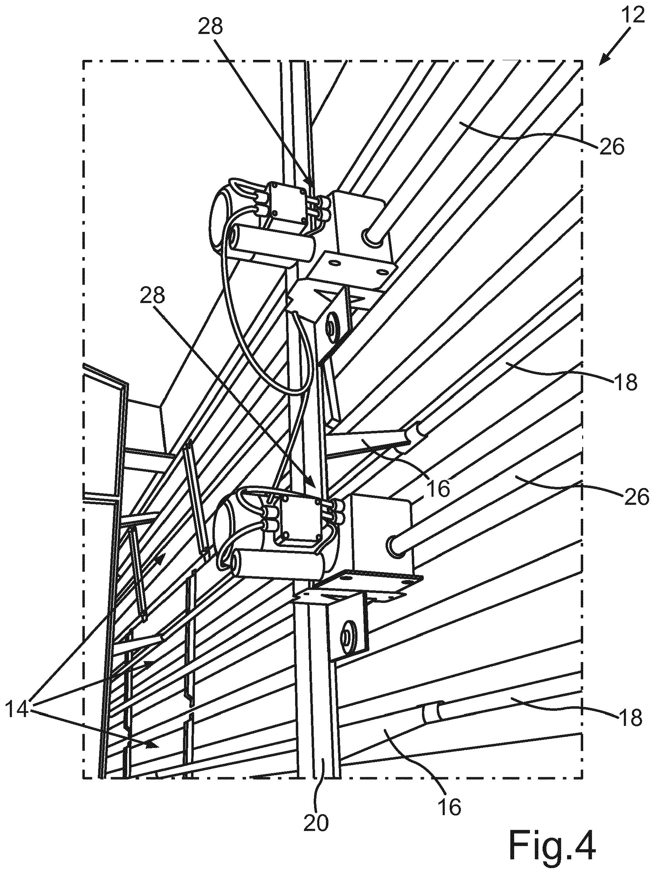

In Fig. 4 ist das Klappensystem 12 wiederum aus dem Inneren des Viehstalls 10 in einer perspektivischen Detailansicht gezeigt. Vorliegend sind nochmals die beiden Antriebswellen 26 gut zu erkennen, die bezogen auf die Hochrichtung des Klappensystems 12 an unterschiedlichen Positionen angeordnet sind. Zur besagten Antriebseinrichtung gehören neben den Antriebswellen 26 noch jeweilige Elektromotoren, welche mit den Antriebswellen 26 verbunden sind. Die Elektromotoren 28 können somit die Antriebswellen 26 in Drehung versetzen.

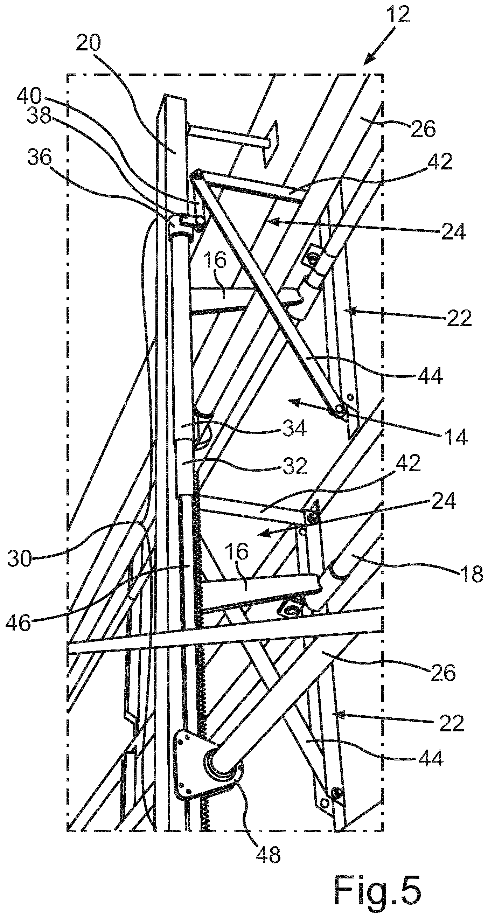

In Fig. 5 ist wiederum ein Ausschnitt des Klappensystems 12 aus dem Inneren des Viehstalls 10 heraus gezeigt. Das Klappensystem 12 umfasst mehrere Mitnehmereinheiten 30, wobei nur eine dieser Mitnehmereinheiten 30 vorliegend gezeigt ist. Die Mitnehmereinheit 30 ist translatorisch in Hochrichtung des Klappensystems 12 bewegbar gelagert, und zwar an dem Pfosten 20. Die Mitnehmereinheit 30 umfasst ein glattes Rohr 32, welches in einer Schelle 34 nach oben und unten bewegbar gelagert ist, wobei die Schelle 34 an dem Pfosten 20 befestigt ist. In einem oberen Bereich des Rohrs 32 ist noch ein Aufsatz 36 angebracht, welcher entlang des Rohrs 32 nach oben und nach unten verschoben werden kann. Nachdem der Aufsatz 36 an einer wunschgemäßen Position angeordnet wurde, kann dieser an dem Rohr 32 befestigt werden. Am Aufsatz 36 ist ein Fortsatz 38 angeordnet, welcher unter Vermittlung eines Ausgleichselements 40 gelenkig mit der Rahmenstruktur 24 verbunden ist, die an der obersten Klappe 14 unter Vermittlung des Halters 22 mit der Klappe 14 verbunden ist.

Alle als Übersetzungen dienenden Rahmenstrukturen 24 umfassen zwei Streben 42, 44, welche gemeinsam mit den jeweiligen Haltern 22 jeweilige Dreiecke bilden. An der Stelle, wo die beiden Streben 42, 44 miteinander verbunden sind, sind die jeweiligen Ausgleichselemente 40 angeschraubt.

Unterhalb von dem Rohr 32 ist eine Zahnstange 46 der Mitnehmereinheit 30 angeordnet. Die Zahnstange 46 ist dabei fest mit dem Rohr 32 verbunden. Die besagte Antriebseinrichtung umfasst neben den erwähnten Antriebswellen 26 jeweils noch ein mit der jeweiligen Antriebswelle 26 verbundenes Zahnrad, welches hier nicht zu erkennen ist, da dieses in einem Gehäuse 48 angeordnet ist. Besagtes Zahnrad greift in die Zahnstange 46 ein.

Werden nun die betreffenden Elektromotoren 28 (siehe Fig. 4) betätigt, so werden die entsprechenden Antriebswellen 26 in Rotation versetzt, in Folge dessen die in den jeweiligen Gehäusen 48 angeordneten und hier nicht erkennbaren Zahnräder die jeweiligen Zahnstangen 46 der jeweiligen Mitnehmereinheiten 30 antreiben. Die jeweiligen Zahnstangen 46 werden dadurch in eine translatorische Bewegung, entweder nach oben oder nach unten, je nach Drehrichtung der Elektromotoren 28, versetzt. Da die Zahnstangen 46 fest mit den Rohren 32 verbunden sind, bewegen sich die Rohre 32 entsprechend translatorisch in Hochrichtung des Klappensystems 12 entweder nach oben oder nach unten. Diese translatorische Bewegung der Rohre 32 führt dazu, dass unter Vermittlung der jeweiligen Ausgleichselemente 40 die als Übersetzung dienenden Rahmenstrukturen 24 in eine Drehbewegung versetzt werden. Dadurch, dass die beiden Streben 42, 44 der Rahmenstrukturen 24 fest mit den jeweiligen Haltern 22 verbunden sind, welche wiederum an den Klappen 14 befestigt sind, werden bei einer translatorischen Bewegung der Mitnehmereinheit 30 die entsprechenden Klappen 14 aufgeschwenkt bzw. zugeschwenkt.

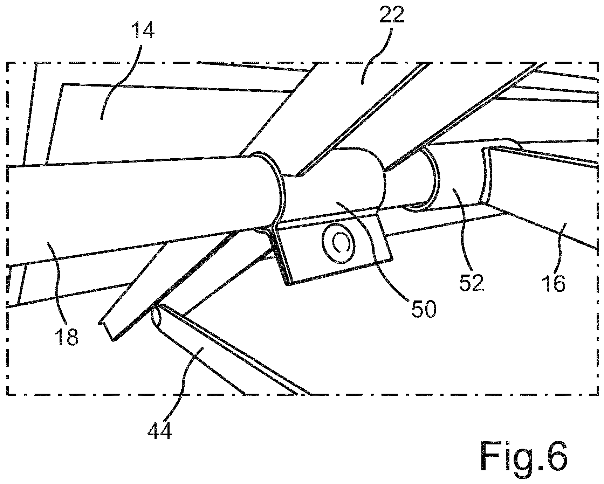

In Fig. 6 ist eine der Klappen 14 teilweise in einer vergrößerten Ansicht gezeigt. Hier kann man einen der Halter 22 erkennen, welcher an der Klappe 14 befestigt ist. Der Halter 22 ist mit einer Schelle 50 verschweißt, mittels welcher Halter 22 verdrehfest mit der hier gezeigten Trägerachse 18 verbunden ist. Vorliegend kann man auch noch einen der Trägerarme 16 erkennen, welcher ein Lager 52 aufweist, mittels welchem die Trägerachse 18 translatorisch zumindest im Wesentlichen beweglich und um ihre Längsachse verdrehbar gelagert gehalten wird.

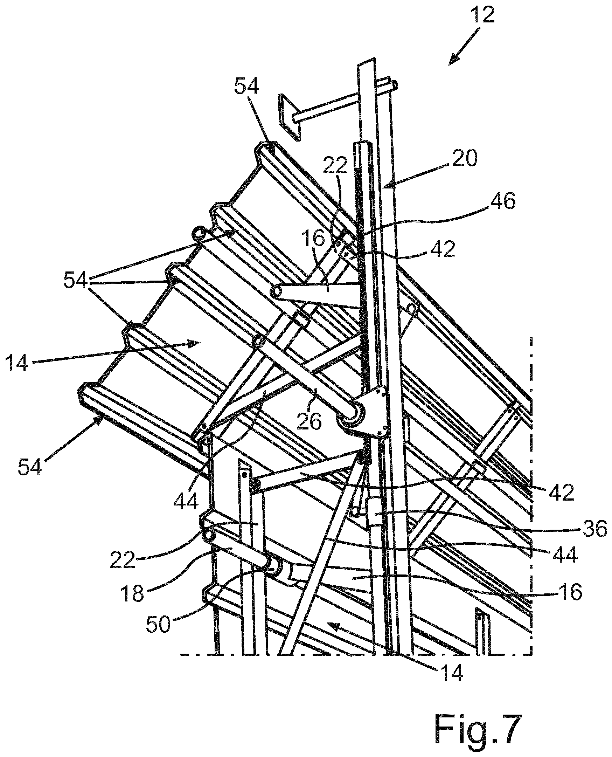

In Fig. 7 ist ein oberer Ausschnitt eines Teils des Klappensystems 12 in einer Perspektivansicht gezeigt. Wie man hier gut erkennt, weisen die Klappen 14 fünf erhabene Strukturen 54 auf, welche sich in Längsrichtung der jeweiligen Klappen 14 erstrecken. Diese erhabenen Strukturen 54 sind unter anderem an den jeweiligen oberen und unteren Enden der Klappen 14 ausgebildet und weisen eine in Tiefenrichtung der Klappen 14 erhabene Form auf. In der geschlossenen Stellung der Klappen 14 greifen diese an den oberen und unteren Enden der Klappen 14 vorhandenen erhabenen Strukturen 54 zumindest im Wesentlichen formschlüssig ineinander. Dadurch dichten sich die überlappend angeordneten Klappen 14 in ihrer geschlossenen Stellung gegenseitig ab. Diese erhabenen Strukturen 54 können beispielsweise einen trapezförmigen Querschnitt aufweisen, welcher mehrere Ecken aufweist. Dadurch kann in Hochrichtung des Klappensystems 12 entlang der geschlossenen Klappen 14 strömender Wind nur schwer zwischen die Klappen 14 gelangen. Andere Formgebungen der erhabenen Strukturen 54 sind auch möglich. Neben der Abdichtwirkung dienen die erhabenen Strukturen 54 auch noch zur Versteifung der jeweiligen Klappen 14.

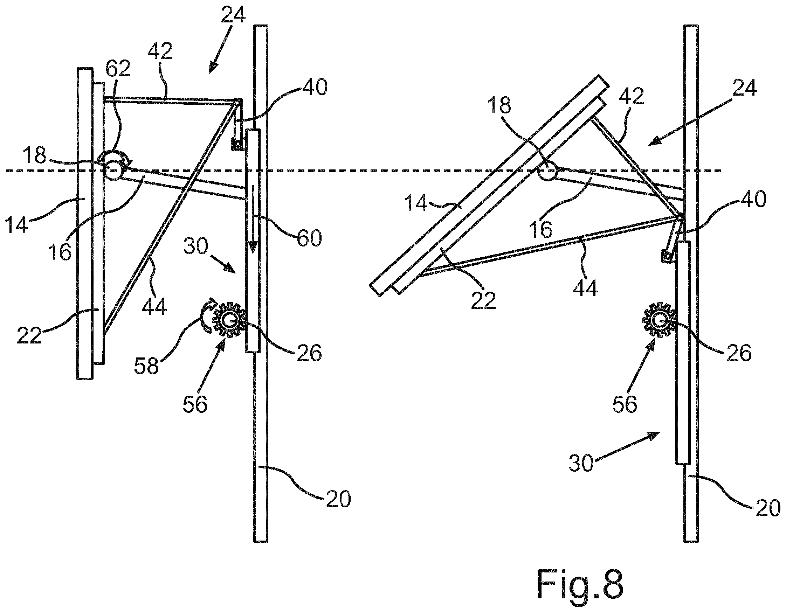

In Fig. 8 ist eine der Klappen 14 in einer schematischen Seitenansicht zweimal dargestellt, nämlich links in ihrer geschlossenen Stellung und rechts in einem geöffneten Stellung Position. Vorliegend kann man erstmals eines der bereits erwähnten Zahnräder 56 erkennen, welche verdrehfest mit den jeweiligen Antriebswellen 26 verbunden sind. Wird die hier gezeigte Antriebswelle 26 mittels eines der Elektromotoren 28 (siehe Fig. 4) entsprechend der vorliegenden Darstellung im Uhrzeigersinn verdreht bzw. angetrieben, so dreht sich das Zahnrad 56 ebenfalls im Uhrzeigersinn gemäß der mit dem Pfeil 58 gekennzeichneten Drehrichtung. Vorliegend ist die Mitnehmereinheit 30 nur schematisch angedeutet, wobei das glatte Rohr 32 und die Zahnstange 46 (siehe Fig. 5) nicht im Einzelnen dargestellt sind. Durch die Drehbewegung des Zahnrads 56 entsprechend der Drehrichtung 58 wird die Mitnehmereinheit 30 entsprechend der mit dem Pfeil 60 gekennzeichneten translatorischen Bewegungsrichtung nach unten bewegt.

Da die Mitnehmereinheit 30 unter Vermittlung des Ausgleichselements 40 gelenkig mit der Rahmenstruktur 24 verbunden ist, zieht das Ausgleichselement 40 entsprechend der Bewegung der Mitnehmereinheit 30 die Rahmenstruktur 24 an derjenigen Ecke, an welcher die beiden Streben 42, 44 miteinander verbunden sind, nach unten. Die Rahmenstruktur 24 ist wiederum mit dem hier gezeigten Halter 22 fest verbunden. Der Halter 22 ist wiederum verdrehfest mit der Trägerachse 18 verbunden, welche vom Trägerarm 16 translatorisch unbeweglich aber um ihre Längsachse verdrehbar gehalten wird.

Durch die translatorische Bewegung der Mitnehmereinheit 30 nach unten und der entsprechenden Lagerung der Trägerachse 18 dreht die Rahmenstruktur 24 mitsamt dem Halter 22 gemäß der mit dem Pfeil 62 gekennzeichneten Drehrichtung. In Folge dessen wird die Klappe 14 ebenfalls in der Drehrichtung 62 verschwenkt. Die Klappe 14 wird dabei aufgrund der Befestigung an der Trägerachse 18 translatorisch nicht bewegt und lediglich rotatorisch entsprechend der Drehrichtung 62 aufgeschwenkt. Vergleicht man die geschlossene Stellung links mit der geöffneten Stellung der Klappe 14 rechts in Fig. 8, so erkennt man, dass der Anbindungspunkt des Ausgleichselements 40 an der Rahmenstruktur 24 - also die Stelle, wo die beiden Streben 42, 44 und die Ausgleichselement 40 aufeinandertreffen - sowohl nach unten als auch nach rechts gewandert ist. Daher ist die gelenkige Anbindung des Ausgleichselements 40 an der Rahmenstruktur 24 und an der Mitnehmereinheit 30 erforderlich. Denn die Mitnehmereinheit 30 kann sich lediglich auf und ab bewegen, jedoch nicht nach links und rechts. Das Ausgleichselement 40 gleicht also die Bewegung des Anbindungspunkts der Rahmenstruktur 24, an welchem die beiden Streben 42, 44 miteinander befestigt sind und an welchen das Ausgleichselement 40 angreift, aus. Wie man erkennen kann, wird das Ausgleichselement 40 bei der Rotation der Klappe 14 entsprechend verdreht, sodass die Bewegung der Rahmenstruktur 24 nach rechts ausgeglichen werden kann.

Wie man insbesondere anhand der Fig. 1 und 2 erkennen kann, sind mehrere der Klappen 14 in Längsrichtung des Klappensystems 12 fluchtend in jeweiligen Reihen hintereinander angeordnet und je horizontaler Reihe mit einer der jeweiligen Trägerachsen 18 verbunden. Je Klappe 14 sind dabei jeweilige Trägerarme 16 vorgesehen, mittels welchen die jeweiligen Trägerachsen 18 translatorisch unbeweglich und um ihre Längsachse verdrehbar gelagert sind. An jeder dieser Klappen 14, welche in Längsrichtung des Klappensystems 12 fluchtend in einer Reihe hintereinander angeordnet sind, sind die jeweiligen Rahmenstrukturen 24 angebracht. Je Klappe 14 ist jeweils eine der Mitnehmereinheiten 30 und ein jeweiliges Ausgleichselement 40 vorgesehen, unter deren Vermittlung die jeweiligen Mitnehmereinheiten 30 gelenkig mit der jeweiligen Rahmenstruktur 24 verbunden sind, sodass jeweilige translatorische Bewegungen der Mitnehmereinheiten 30 zum Verschwenken der jeweiligen Klappen 14 führen. Die Klappen 14 können dabei im Bereich ihrer äußeren Längsenden längsverschieblich zur jeweiligen Trägerachse 18 und in einem mittleren Bereich unverschieblich zur Trägerachse 18 gelagert sein. Dadurch können unterschiedliche Wärmeausdehnungskoeffizienten zwischen der Trägerachse 18 und den Klappen 14 weitestgehend ausgeglichen werden, sodass es zu keinen mechanischen Spannungen insbesondere in den Klappen 14 kommt.

Wie man anhand der Fig. 1 und 2 zudem erkennen kann, sind mehrere der Klappen 14 zudem in Hochrichtung des Klappensystems 12 in jeweiligen Spalten übereinander angeordnet. Auch diese Klappen 14 werden mittels der jeweiligen Trägerarme 16 unter Vermittlung jeweiliger Trägerachsen 18 gehalten. Auch sind an diesen übereinander angeordneten Klappen 14 jeweils die Rahmenstrukturen 24 vorgesehen. Für jede dieser Klappen 14 sind wiederum jeweilige Ausgleichselemente 40 vorgesehen, unter deren Vermittlung die betreffende Mitnehmereinheit 30 gelenkig mit den jeweiligen Rahmenstrukturen 24 der übereinander angeordneten Klappen 14 verbunden ist, sodass in der beschriebenen Weise translatorische Bewegungen der Mitnehmereinheit 30 zum Verschwenken der übereinander angeordneten Klappen 14 führen.

Wie man insbesondere anhand von Fig. 8 gut erkennen kann, wird an der Trägerachse 18 kein unmittelbares Drehmoment aufgebracht, um die Klappen 14 zu verschwenken. Stattdessen wird an den jeweiligen Antriebswellen 26 mittels der Elektromotoren 28 ein Drehmoment aufgebracht, in Folge dessen die Zahnräder 56 in Drehung versetzt werden. Diese Drehbewegung wird in eine translatorische Bewegung der jeweiligen Mitnehmereinheiten 30 übersetzt. Die translatorische Bewegung der Mitnehmereinheiten 30 führt wiederum zu einer Rotationsbewegung der Klappen 14, und zwar unter Vermittlung der mit den jeweiligen Haltern 22 verbundenen Rahmenstrukturen 24. Die jeweiligen Rahmenstrukturen 24 wirken dabei als eine Art Getriebe, sodass relativ kleine Drehmomente bzw. Leistungen bei den Elektromotoren 28 ausreichen, um die Vielzahl der Klappen 14 gleichzeitig zu verschwenken.

Die in Längsrichtung des Klappensystems 12 in Reihe hintereinander angeordneten Klappen 14 teilen sich eine der Trägerachsen 18. Denn die jeweiligen an den Klappen 14 befestigen Halter 22 sind alle mit derselben Trägerachse 18 verdrehfest verbunden. An jeweiligen Verbindungsstellen, an denen die Halter 22 mit den Trägerachsen 18 verbunden sind, wird beim Verdrehen der Klappen 14 ein Drehmoment auf die Trägerachsen 18 ausgeübt.

Insbesondere können sehr viele der Klappen 14 in jeweiligen Reihen hintereinander angeordnet sein und problemlos synchron aufgeschwenkt und zugeschwenkt werden. Denn konstruktionsbedingt werden die Trägerachsen 18, auf welchen die jeweiligen Reihen der Klappen 14 sitzen, beim Verschwenken der Klappen 14 quasi gar nicht verdreht. Dadurch ist es möglich, die Vielzahl der in Längsrichtung des Klappensystems 12 hintereinander angeordneten Klappen 14 problemlos synchron zu öffnen und zu schließen. Die Trägerachsen 18 können entsprechend klein dimensioniert werden, da auf diese mittels der einzelnen Halter 22 mit gedreht werden. Es greift also nicht nur an einer Stelle der Trägerachse 18 ein Drehmoment an, um die Trägerachse 18 zu verdrehen und dadurch die Klappen 14 zu verschwenken. Stattdessen dienen die Trägerachsen 18 nur dazu, die Klappen 14 in allen drei Raumrichtungen fixiert und um die Längsrichtung der Trägerachsen 18 verschwenkbar zu lagern.

Dadurch, dass die Trägerachsen 18 ungefähr unterhalb des oberen Drittels der Klappen 14 befestigt sind, sind die Klappen 14 auch besonders windunempfindlich. Kommt gemäß der Darstellung in Fig. 8 beispielsweise Wind von links, so drückt dieser oberhalb und unterhalb von der Trägerachse 18 gegen die Klappe 14, in Folge dessen die Klappe 14 keinem großen Moment ausgesetzt ist, welches die Klappe 14 verdrehen würde. Denn die oberhalb und unterhalb von der Trägerachse 18 angreifenden Kräfte gleichen sich zumindest teilweise aus, umso mehr, je mittiger die Trägerachse 18 an der Klappe 14 angeordnet ist. Gleiches gilt natürlich auch, wenn der Wind von rechts kommen sollte.

Insgesamt weist das Klappensystem 12 konstruktionsbedingt eine sehr geringe Windempfindlichkeit auf. Das heißt, die Klappen 14 können auch bei starken Winden zuverlässig in einer bestimmten Stellung gehalten werden. Zudem ist es aufgrund des Konstruktionsprinzips des Klappensystems 12 möglich, eine Vielzahl der Klappen 14 in Längsrichtung hintereinander angeordnet synchron zu öffnen und zu schließen.

### BEZUGSZEICHENLISTE

- 10: Viehstall
- 12: Klappensystem
- 14: Klappen
- 16: Trägerarm
- 18: Trägerachse
- 20: Pfosten
- 22: Halter
- 24: Rahmenstruktur
- 26: Antriebswelle
- 28: Elektromotor
- 30: Mitnehmereinheit
- 32: Rohr der Mitnehmereinheit
- 34: Schelle
- 36: Aufsatz am Rohr der Mitnehmereinheit
- 38: Fortsatz am Aufsatz
- 40: Ausgleichselement
- 42: Strebe der Rahmenstruktur
- 44: Strebe der Rahmenstruktur
- 46: Zahnstange der Mitnehmereinheit
- 48: Gehäuse
- 50: Schelle am Halter
- 52: Lager am Trägerarm
- 54: erhabene Strukturen an den Klappen
- 56: Zahnrad
- 58: Drehrichtung des Zahnrads
- 60: translatorische Bewegungsrichtung der Mitnehmereinheit
- 62: Drehrichtung der Klappe

## Patentansprüche

1. Klappensystem (12) für ein Gebäude (10), welches insbesondere als Belüftungseinrichtung, Sonnenschutz, Isolationsschutz, Sichtschutz und/oder Witterungsschutz ausgelegt ist, umfassend
- einen Trägerarm (16), mittels welchem eine Trägerachse (18) translatorisch unbeweglich und um ihre Längsachse verdrehbar gelagert ist;
- eine verdrehfest mit der Trägerachse (18) verbundene und dadurch verschwenkbare Klappe (14), wobei die Trägerachse (18) zwischen einem oben Ende und einem unteren Ende der Klappe (14) angeordnet ist;
- eine als Übersetzung dienende Rahmenstruktur (24), die mit der Klappe (14) verbunden ist;
- eine translatorisch in Hochrichtung des Klappensystems (12) bewegbar gelagerte Mitnehmereinheit (30), welche unter Vermittlung eines Ausgleichselements (40) gelenkig mit der Rahmenstruktur (24) verbunden ist, sodass eine translatorische Bewegung der Mitnehmereinheit (30) ein Verschwenken der Klappe (14) bewirkt;
- eine Antriebseinrichtung zum Bewegen der Mitnehmereinheit (30).

2. Klappensystem (12) nach Anspruch 1,
**dadurch gekennzeichnet, dass**
die Trägerachse (18) in einer oberen Hälfte der Klappe (14) angeordnet ist.

3. Klappensystem (12) nach Anspruch 1 oder 2,
**dadurch gekennzeichnet, dass**
die Antriebseinrichtung wenigstens eine Antriebswelle (26) mit einem Zahnrad (56) aufweist, welches in eine Zahnstange (46) der Mitnehmereinheit (30) eingreift.

4. Klappensystem (12) nach Anspruch 3,
**dadurch gekennzeichnet, dass**
die Antriebswelle (26) und die Trägerachse (18) parallel zueinander ausgerichtet sind.

5. Klappensystem (12) nach einem der vorhergehenden Ansprüche,
**dadurch gekennzeichnet, dass**
die als Übersetzung dienende Rahmenstruktur (24) zwei Streben (42, 44) aufweist, die gemeinsam mit einem Halter (22), unter dessen Vermittlung die Klappe (14) verdrehfest mit der Trägerachse (18) verbunden ist, ein Dreieck bilden.

6. Klappensystem (12) nach Anspruch 5,
**dadurch gekennzeichnet, dass**
die Streben (42, 44) an einer Ecke des Dreiecks miteinander verbunden sind, an welcher die Ausgleichseinheit (40) gelenkig befestigt ist.

7. Klappensystem (12) nach einem der vorhergehenden Ansprüche,
**dadurch gekennzeichnet, dass**
- mehrere der Klappen (14) in Längsrichtung des Klappensystems (12) fluchtend in einer Reihe hintereinander angeordnet und mit der Trägerachse (18) verbunden sind,
- je Klappe (14) ein separater Trägerarm (16) vorgesehen ist, mittels welchem die Trägerachse (18) translatorisch unbeweglich und um ihre Längsachse verdrehbar gelagert ist;
- an jeder dieser Klappen (14) die als Übersetzung dienende Rahmenstruktur (24) angebracht ist;
- je Klappe (14) eine der Mitnehmereinheiten (30) und Ausgleichselemente (40) vorgesehen ist, unter deren Vermittlung die Mitnehmereinheiten (30) gelenkig mit der jeweiligen Rahmenstruktur (24) verbunden sind, sodass eine translatorische Bewegung der Mitnehmereinheiten (30) ein Verschwenken der Klappen (14) bewirkt.

8. Klappensystem (12) nach Anspruch 7,
**dadurch gekennzeichnet, dass**
die Klappen (14) im Bereich ihrer äußeren Längsenden längsverschieblich zur Trägerachse (18) und in einem mittleren Bereich unverschieblich zur Trägerachse (18) gelagert sind.

9. Klappensystem (12) nach einem der vorhergehenden Ansprüche,
**dadurch gekennzeichnet, dass**
- mehrere der Klappen (14) in Hochrichtung des Klappensystems (12) in einer Spalte übereinander angeordnet sind;
- je Klappe (14) eine separate Trägerachse (18) vorgesehen ist, welche mittels eines jeweils separaten Trägerarms (16) translatorisch unbeweglich um ihre jeweilige Längsachse verdrehbar gelagert ist;
- an jeder dieser Klappen (14) die als Übersetzung dienende Rahmenstruktur (24) angebracht ist;
- für diese Klappen (14) jeweils eines der Ausgleichselemente (40) vorgesehen ist, unter deren Vermittlung die Mitnehmereinheit (30) gelenkig mit der jeweiligen Rahmenstruktur (24) verbunden ist, sodass eine translatorische Bewegung der Mitnehmereinheit (30) ein Verschwenken der Klappen (14) bewirkt.

10. Klappensystem (12) nach Anspruch 9,
**dadurch gekennzeichnet, dass**
die oberen Enden und die unteren Enden der Klappen (14) eine in Tiefenrichtung der Klappen (14) erhabene Form aufweisen, welche in der geschlossenen Stellung der Klappen (14) formschlüssig ineinandergreifen.

## Claims

1. Flap system (12) for a building (10), which is designed in particular as a ventilation device, sun screen, insulation protection, privacy screen and/or weather protection, comprising
- a support arm (16), by means of which a support axis (18) is mounted in a manner that is translationally fixed and rotatable about the longitudinal axis thereof;
- a flap (14) that is connected for conjoint rotation with the support axis (18) and thereby pivotable, wherein the support axis (18) is arranged between a top end and a bottom end of the flap (14);
- a frame structure (24) being used as a transmission which is connected to the flap (14);
- a driver unit (30) which is mounted to move in a translational manner in the vertical direction of the flap system (12) and which is connected in an articulated manner by means of a compensating element (40) to the frame structure (24) so that a translational movement of the driver unit (30) causes the flap (14) to pivot;
- a drive device for moving the driver unit (30).

2. Flap system (12) according to claim 1,
**characterised in that**
the support axis (18) is arranged in an upper half of the flap (14).

3. Flap system (12) according to claim 1 or 2,
**characterised in that**
the drive device has at least one drive shaft (26) with a toothed wheel (56), which engages in a rack (46) of the driver unit (30).

4. Flap system (12) according to claim 3,
**characterised in that**
the drive shaft (26) and the support axis (18) are aligned parallel to one another.

5. Flap system (12) according to any one of the preceding claims,
**characterised in that**
the frame structure (24) being used as a transmission has two struts (42, 44), which form a triangle together with a holder (22), by means of which the flap (14) is connected for conjoint rotation to the support axis (18).

6. Flap system (12) according to claim 5,
**characterised in that**
the struts (42, 44) are connected to one another at a corner of the triangle, on which the compensating unit (40) is fixed in an articulated manner.

7. Flap system (12) according to any one of the preceding claims,
**characterised in that**
- several of the flaps (14) are arranged behind one another aligned in a row in the longitudinal direction of the flap system (12) and are connected to the support axis (18).
- each flap (14) is provided with a separate support arm (16), by means of which the support axis (18) is mounted in a manner that is translationally fixed and rotatable about the longitudinal axis thereof;
- the frame structure (24) being used as a transmission is attached on each of these flaps (14);
- each flap (14) is provided with one of the driver units (30) and compensating elements (40), by means of which the driver units (30) are connected in an articulated manner to the respective frame structure (24), so that a translational movement of the driver units (30) causes the flaps (14) to pivot.

8. Flap system (12) according to claim 7,
**characterised in that**
the flaps (14) are mounted in the region of their outer longitudinal ends so as to be moveable longitudinally to the support axis (18), and in a central region so as to be immovable to the support axis (18).

9. Flap system (12) according to any one of the preceding claims,
**characterised in that**
- several of the flaps (14) are arranged above one another in a column in the vertical direction of the flap system (12);
- each flap (14) is provided with a separate support axis (18), which is mounted so as to be rotatable in a translationally fixed manner about its respective longitudinal axis by means of respectively separate support arms (16);
- on each of these flaps (14) the frame structure (24) being used as a transmission is attached;
- for these flaps (14) respectively one of the compensating elements (40) is provided, by means of which the driver unit (30) is connected in an articulated manner to the respective frame structure (24), so that a translational movement of the driver unit (30) causes the flaps (14) to pivot.

10. Flap system (12) according to claim 9,
**characterised in that**
the top end and the bottom end of the flaps (14) have a shape raised in the depth direction of the flaps (14), which engage with one another in an interlocking manner in the closed position of the flaps (14).

## Revendications

1. Système de trappe (12) pour un bâtiment (10), lequel est conçu en particulier en tant que dispositif de ventilation, protection contre le soleil, protection isolante, protection contre les regards indiscrets et/ou protection en cas d'intempéries, comprenant
- un bras de support (16), au moyen duquel un axe de support (18) est monté de manière immobile en translation et de manière à pouvoir tourner autour de son axe longitudinal ;
- une trappe (14) reliée de manière solidaire en rotation à l'axe de support (18) et pouvant ainsi pivoter, l'axe de support (18) étant disposé entre une extrémité supérieure et une extrémité inférieure de la trappe (14) ;
- une structure de cadre (24) servant de transmission, qui est reliée à la trappe (14) ;
- une unité d'entraînement (30) montée de manière mobile en translation selon une direction verticale du système de trappe (12), laquelle est reliée de manière articulée à la structure de cadre (24) par l'intermédiaire d'un élément de compensation (40), de sorte qu'un déplacement en translation de l'unité d'entrainement (30) entraîne un pivotement de la trappe (14) ;
- un dispositif d'entraînement destiné à déplacer l'unité d'entraînement (30).

2. Système de trappe (12) selon la revendication 1,
**caractérisé en ce que**
l'axe de support (18) est disposé dans une moitié supérieure de la trappe (14).

3. Système de trappe (12) selon la revendication 1 ou 2,
**caractérisé en ce que**
le dispositif d'entraînement présente au moins un arbre d'entraînement (26) avec une roue dentée (56), laquelle entre en prise dans un porte-encoche (46) de l'unité d'entraînement (30).

4. Système de trappe (12) selon la revendication 3,
**caractérisé en ce que**
l'arbre d'entraînement (26) et l'axe de support (18) sont orientés parallèlement l'un à l'autre.

5. Système de trappe (12) selon l'une quelconque des revendications précédentes,
**caractérisé en ce que**
la structure de cadre (24) servant de transmission présente deux entretoises (42, 44),
qui forment un triangle conjointement avec un support (22), par l'intermédiaire duquel la trappe (14) est reliée de manière solidaire en rotation à l'axe de support (18).

6. Système de trappe (12) selon la revendication 5,
**caractérisé en ce que**
les entretoises (42, 44) sont reliées l'une à l'autre au niveau d'un angle du triangle, auquel l'unité de compensation (40) est fixée de manière articulée.

7. Système de trappe (12) selon l'une quelconque des revendications précédentes,
**caractérisé en ce que**
- plusieurs des trappes (14) sont disposées de manière alignée les unes derrière les autres en rang dans le sens longitudinal du système de trappe (12) et reliées à l'axe de support (18),
- un bras de support (16) distinct est prévu sur chaque trappe (14), au moyen duquel l'axe de support (18) est monté de manière immobile en translation et de manière à pouvoir tourner autour de son axe longitudinal ;
- au niveau de chacune de ces trappes (14) est fixée la structure de cadre (24) servant de transmission ;
- l'un parmi les unités d'entrainement (30) et les éléments de compensation (40) est prévu sur chaque trappe (14), par l'intermédiaire desquelles les unités d'entraînement (30) sont reliées de manière articulée à la structure de cadre (24) respective, de sorte qu'un déplacement en translation des unités d'entraînement (30) entraîne un pivotement des trappes (14).

8. Système de trappe (12) selon la revendication 7,
**caractérisé en ce que**
les trappes (14) sont montées dans la zone de leurs extrémités longitudinales extérieures de manière mobile longitudinalement par rapport à l'axe de support (18) et dans une zone centrale de manière immobile par rapport à l'axe de support (18).

9. Système de trappe (12) selon l'une quelconque des revendications précédentes,
**caractérisé en ce que**
- plusieurs des trappes (14) sont disposées les unes sur les autres dans une colonne dans le sens longitudinal du système de trappe (12) ;
- un axe de support (18) distinct est prévu sur chaque trappe (14), lequel au moyen d'un bras de support (16) distinct respectif est monté de manière immobile en translation autour de son axe longitudinal respectif ;
- au niveau de chacune de ces trappes (14) est fixée la structure de cadre (24) servant de transmission ;
- respectivement l'un parmi les éléments de compensation (40) est prévu pour ces trappes (14), par l'intermédiaire desquelles l'unité d'entraînement (30) est reliée de manière articulée à la structure de cadre (24) respective, de sorte qu'un déplacement en translation de l'unité d'entraînement (30) entraîne un pivotement des trappes (14).

10. Système de trappe (12) selon la revendication 9,
**caractérisé en ce que**
les extrémités supérieures et les extrémités inférieures des trappes (14) présentent une forme surélevée dans la direction profonde des trappes (14), lesquelles s'engagent les unes dans les autres par liaison de forme en position fermée des trappes (14).
